# EUROPÄISCHE PATENTSCHRIFT

(11) **EP 1 714 066 B1**
(45) Veröffentlichungstag und Bekanntmachung des Hinweises auf die Patenterteilung: **04.11.2009**
(21) Anmeldenummer: 04797805.1
(22) Anmeldetag: 11.11.2004
(51) Int. Cl.: F16L 3/13

(54) **VORRICHTUNG ZUM HALTEN VON WENIGSTENS ZWEI LÄNGLICHEN GEGENSTÄNDEN**
DEVICE FOR HOLDING AT LEAST TWO OBLONG ARTICLES
DISPOSITIF DE FIXATION D'AU MOINS DEUX OBJETS DE FORME ALLONGEE

(30) Priorität: 04.02.2004 DE 102004005432
(43) Veröffentlichungstag der Anmeldung: 25.10.2006
(73) Patentinhaber: A. Raymond & Cie, 38028 Grenoble (FR)
(72) Erfinder: GAUGER, Hans, 30966 Hemmingen (DE)
(74) Vertreter: Rüttgers, Joachim
(86) Internationale Anmeldenummer: PCT/EP2004/012767
(87) Internationale Veröffentlichungsnummer: WO 2005/075870

(56) Entgegenhaltungen:
- GB-A- 2 092 216
- US-A- 2 746 112
- US-A- 4 437 633
- US-A- 5 645 252

## Beschreibung

Die Erfindung betrifft eine Vorrichtung zum Halten von wenigstens zwei länglichen Gegenständen gemäß dem Oberbegriff des Patentanspruches 1.

Eine derartige Vorrichtung ist aus GB-A-2 092 216 bekannt. Diese Vorrichtung weist ein einen Aufnahmeraum für die Gegenstände umschließendes Aufnahmeteil auf. Das Aufnahmeteil verfügt über einen Widerlagerbereich, an dem der in das Aufnahmeteil zuerst eingeführte erste Gegenstand anliegt. Weiterhin sind mit dem Aufnahmeteil in Verbindung stehende Federelemente zum Fixieren der Gegenstände vorhanden, wobei ein Federelement als eine quer zur Längsrichtung des Aufnahmeteiles zwischen einer Auslenkstellung und einer Ruhestellung bewegliche Arretierzunge ausgebildet ist. Die Arretierzunge weist an ihrem freien Ende einen an dem ersten Gegenstand anliegenden Abschnitt und in Einführrichtung dem Aufnahmeabschnitt vorgelagert ein in der Ruhestellung in den Aufnahmeraum vorstehendes Anlenkelement auf, wobei sich bei Einführen des ersten Gegenstandes bei Kontakt des Anlenkelementes mit dem ersten Gegenstand das freie Ende in die Auslenkstellung bewegt. Dadurch ist es möglich, neben wenigen im Querschnitt verhältnismäßig dicken Gegenständen auch eine größere Anzahl von im Querschnitt verhältnismäßig dünnen Gegenständen zu halten, wobei die Gegenstände immer aneinander anliegen. Dies ist jedoch insbesondere bei verhältnismäßig empfindlichen Gegenständen von Nachteil.

Eine weitere Vorrichtung zum Halten von wenigstens zwei länglichen Gegenständen ist aus der US-A-4,437,633 bekannt. Diese Vorrichtung verfügt über ein Aufnahmeteil, in das in einer Einführrichtung längliche Gegenstände, beispielsweise Rohr- oder Kabelleitungen, einfügbar sind. An Seitenwänden des Aufnahmeteiles sind in den Mittenbereich des Aufnahmeraumes gerichtete und in Einführrichtung der Gegenstände aufeinander zu laufende elastische Haltezungen angesetzt. Die Enden von zwischen zwei Gegenständen angeordneten Haltezungen halten die jeweiligen Gegenstände in einem Abstand voneinander, und die Enden der den Aufnahmeraum abschließenden Haltezungen liegen an dem zuletzt eingefügten Gegenstand an. Zwar werden mit dieser Vorrichtung Gegenstände in einem in etwa der Dicke der Haltezungen entsprechenden Abstand voneinander gehalten, allerdings besteht aufgrund der Elastizität der Haltezungen und der relativ nahen Anordnung zueinander beispielsweise bei starken Erschütterungen die Gefahr, dass sich die Gegenstände gegeneinander bewegen und sich berühren. Dies ist jedoch, wie bereits bei der gattungsgemäßen Vorrichtung erwähnt, insbesondere bei verhältnismäßig empfindlichen Gegenständen von Nachteil. Ein weiterer Nachteil besteht darin, dass die Gegenstände nicht oder nur unter Zerstörung beziehungsweise zumindest Beschädigung der Haltezungen wieder aus der Vorrichtung entfernbar sind.

Der Erfindung liegt die Aufgabe zugrunde, eine Vorrichtung der eingangs genannten Art zu schaffen, die sich durch ein besonders stabiles Halten von im Querschnitt verhältnismäßig dicken länglichen Gegenständen in einem relativ großen Abstand voneinander auszeichnet und bei der die Gegenstände trotz der stabilen Fixierung problemlos wieder aus dem Aufnahmeteil entfernbar sind.

Diese Aufgabe wird bei einer Vorrichtung der eingangs genannten Art erfindungsgemäß mit den kennzeichnenden Merkmalen des Patentspruches 1 gelöst.

Dadurch, dass bei der erfindungsgemäßen Vorrichtung durch die spezifische Gestaltung des den ersten Gegenstand wenigstens abschnittsweise umschließenden Aufnahmeraumes die Arretierzunge fixiert ist und sich damit nach Einfügen des ersten Gegenstandes nicht bewegen kann und dass das mit der Arretierzunge verbundene Anlenkelement zwischen zwei Gegenständen angeordnet ist, werden die Gegenstände sehr stabil und zuverlässig in einem Abstand voneinander gehalten.

Zweckmäßige Ausführungsbeispiele der Erfindung sind Gegenstand der Unteransprüche.

Weitere zweckmäßige Ausgestaltungen der Erfindung ergeben sich aus der nachfolgenden Beschreibung eines Ausführungsbeispiels mit Bezug auf die Figuren der Zeichnung. Es zeigen:
Fig. 1 in einer perspektivischen Ansicht ein Ausführungsbeispiel einer erfindungsgemäßen Vorrichtung,
Fig. 2 in einem Querschnitt das Ausführungsbeispiel gemäß Fig. 1 beim Einfügen eines ersten Gegenstandes, der sich im Bereich eines Anlenkelementes einer Arretierzunge befindet,
Fig. 3 in einem Querschnitt das Ausführungsbeispiel gemäß Fig. 1 und Fig. 2 mit dem ersten Gegenstand in Anlage an einem Widerlagerbereich mit fixierter Arretierzunge und
Fig. 4 in einem Querschnitt das Ausführungsbeispiel gemäß Fig. 1 bis Fig. 3 mit einem zweiten Gegenstand in Anlage an dem Anlenkelement.

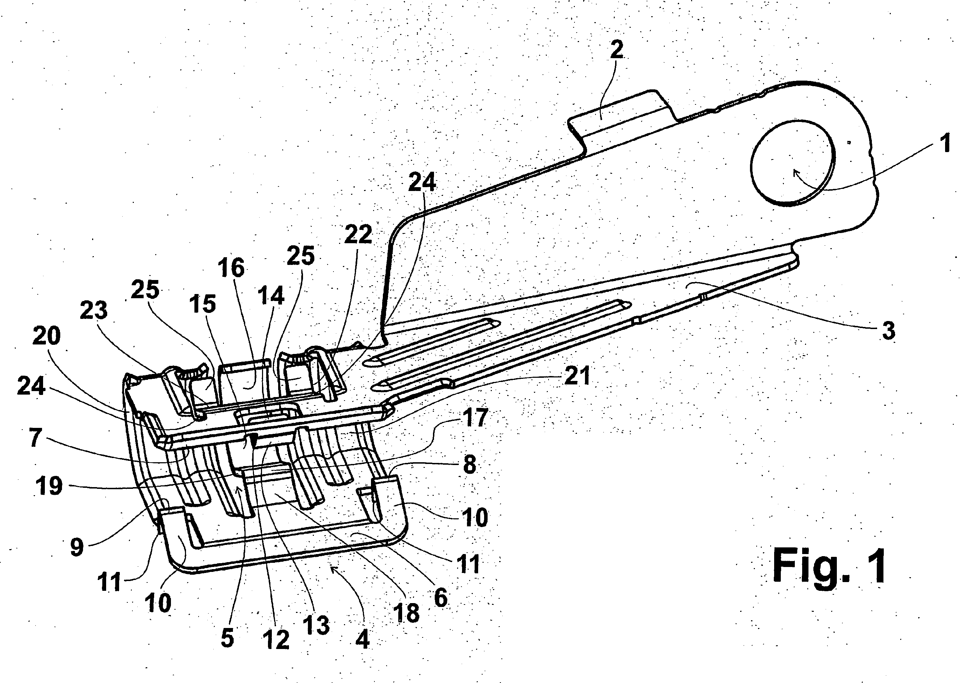

Fig. 1 zeigt in einer perspektivischen Ansicht ein aus einem Metallblech gestanztes und gebogenes Ausführungsbeispiel einer erfindungsgemäßen Vorrichtung, bei dem ein abgewinkeltes und mit einem Befestigungsloch 1 sowie einer Befestigungszunge 2 ausgebildete, zum Befestigen an einem in Fig. 1 nicht dargestellten Trägerteil vorgesehenes Befestigungsteil 3 und ein längliches Aufnahmeteil 4 zum Aufnehmern von zwei in Fig. 1 nicht dargesellten länglichen Gegenständen, beispielsweise Leitungen mit einer Verhältnismäßig empfindlichen Ummantelung wie einer Metallfolie, vorhanden sind. Das Aufnahmeteil 4 weist eine im wesentlichen Uförmige Gestalt auf und umschließt einen Aufnahmeraum 5. Einer der Schenkel des Aufnahmeteiles 4 steht mit dem Befestigungsteil 3 in Verbindung.

An den freien Enden der Schenkel des Aufnahmeteiles 4 sind ein erster Einführsteg 6 beziehungsweise ein zweiter Einführsteg 7 ausgebildet, die einander gegenüberliegen, in Längsrichtung verlaufen und nach außen abgewinkelt sind. An den außenseitigen Randbereichen des ersten Einführsteges 6 sind als Federelemente eine erste Randzunge 8 und eine zweite Randzunge 9 ausgebildet, die mit einem in Einführrichtung ansteigenden Aufgleitabschnitt 10 und einem in Einführrichtung abfallenden Widerlagerabschnitt 11 in den Aufnahmeraum 5 hineinragen.

Im Mittenbereich des an dem mit dem Befestigungsteil 3 in Vereindung stehenden Schenkel ausgebildeten zweiten Einführsteg 7 ist als ein weiteres Federelement eine Mittenzunge 12 vorhanden, die ebenfalls mit einem in Einführrichtung ansteigenden Aufgleitabschnitt 13 und einem in Einführrichtung abfallenden Widerlagerabschnitt 14 ausgebildet ist, die in den Aufnahmeraum 5 hineinragen.

In Einführrichtung hinter dem ersten Einführsteg 6 ist in der Mitte als Federelement eine zwischen einer in Fig. 1 dargestellten Ruhestellung und einer Auslenkstellung bewegliche Arretierzunge 15 vorhanden, die an ihrem freien Ende mit einem rund gebogenen Aufnahmeabschnitt 16 und in Einführrichtung dem Aufnahmeabschnitt 16 vorgelagert mit einem in der Ruhestellung in den Aufnahmeraum 5 vorstehenden Anlenkelement 17 ausgebildet ist. Das Anlenkelement 17 ist bei dem dargestellten Ausführungsbeispiel mit einem in Einführrichtung ansteigenden Vorderabschnitt 18 und mit einem in Einführrichtung abfallenden Rückabschnitt 19 ausgebildet, die in einem Knickbereich zusammenlaufen und dort den erhabensten Bereich des Anlenkelementes 17 bilden. Der Aufnahmeabschnitt 16 ist in der Ruhestellung der Arretierzunge 15 fluchtend mit die Schenkel des Aufnahmeteiles 4 verbindenden und einen Widerlagerbereich bildenden, im wesentlichen halbkreisförmigen Randbögen 20, 21 angeordnet.

Schließlich sind an dem mit dem Befestigungsteil 3 in Verbindung stehenden Schenkel des Aufnahmeteiles 4 beidseitig in Verlängerung der Mittenzunge 12 als weitere Federelemente eine erste Gegenzunge 22 und eine zweite Gegenzunge 23 vorgesehen, die jeweils einen in Einführrichtung ansteigenden Vorderabschnitt 24 und einen in Einführrichtung abfallenden Rückabschnitt 25 aufweisen. Die Vorderabschnitte 24 und Rückabschnitte 25 der Gegenzungen 22, 23, laufen jeweils in einem Knickbereich zusammen, die dem erhabensten Bereich des Anlenkelementes 17 gegenüberliegen.

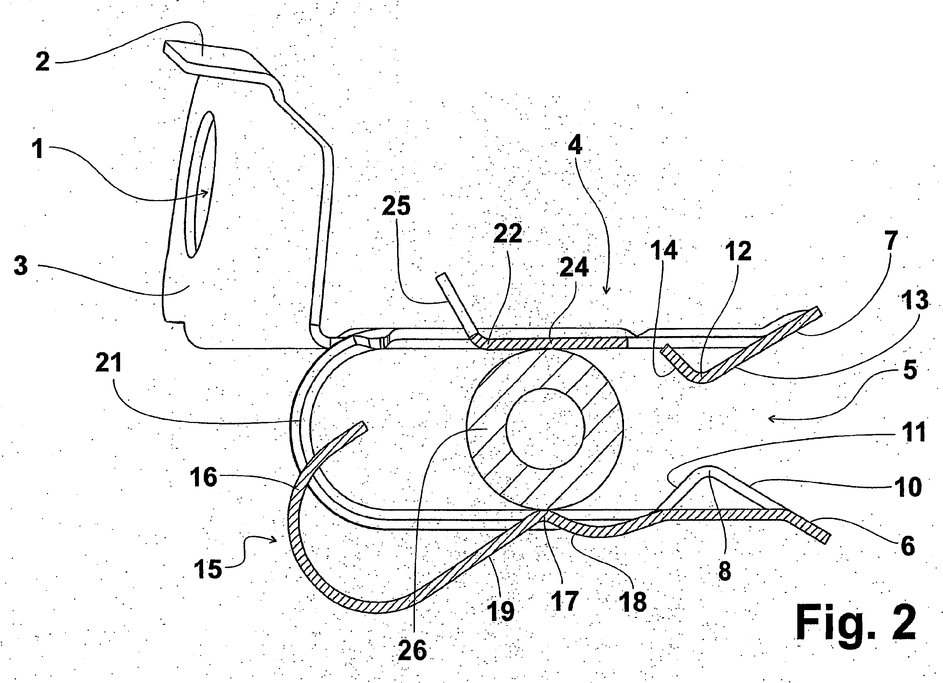

Fig. 2 zeigt in einem Querschnitt das Ausführungsbeispiel gemäß Fig. 1 beim Einfügen eines länglichen ersten Gegenstandes 26, der über die offene Seite des Aufnahmeteiles 4 eingeführt worden ist und sich nunmehr im Bereich des erhabensten Bereiches des an der Arretierzunge 15 vorhandenen Anlenkelementes 17 befindet. Aus Fig. 2 ist ersichtlich, dass sich in dieser Anordnung des ersten Gegenstandes 26 die bewegliche Arretierzunge 15 in einer Auslenkstellung mit maximaler Auslenkung befindet.

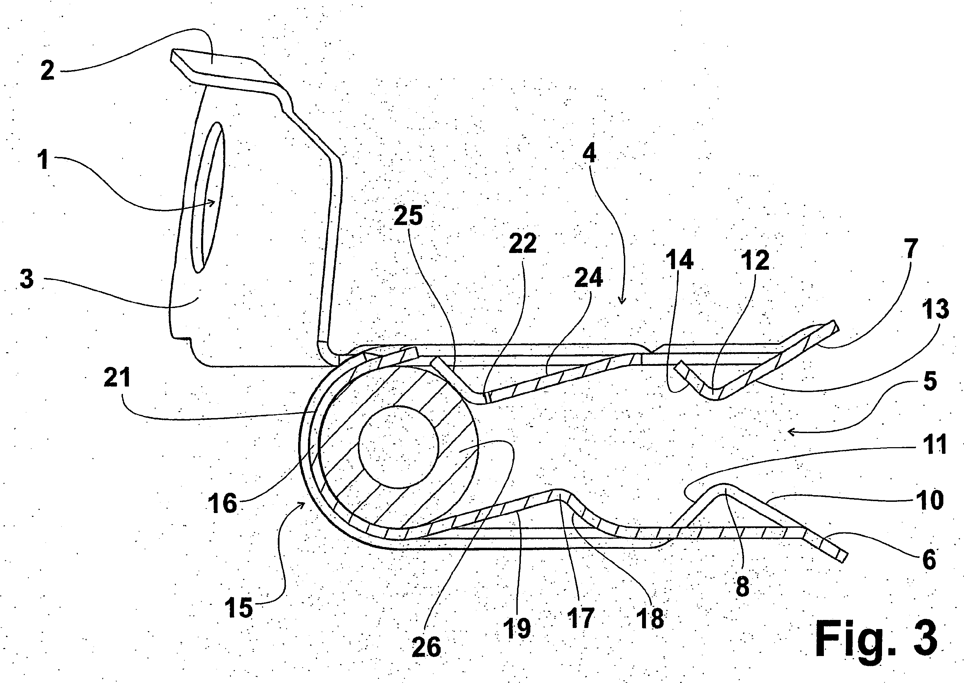

Fig. 3 zeigt in einem Querschnitt das Ausführungsbeispiel gemäß Fig. 1 und Fig. 2 mit dem ersten Gegenstand 26 in Anlage an den den Widerlagerbereich bildenden Randbögen 20, 21. In dieser Anordnung des ersten Gegenstandes 26 befindet sich die Arretierzunge 15 wieder in der Ruhestellung, wobei der Aufnahmeabschnitt 16 der Arretierzunge 15 den durch die aufgrund Formschluss fixierende Wirkung der Randbögen 20, 21 festgelegten ersten Gegenstand 26 umschließt, so dass auch die Arretierzunge 15 fixiert ist. Zusätzlich zu der Haltewirkung des entgegen der Einführrichtung ansteigenden Rückabschnittes 19 des Anlenkelementes 17 liegen die Rückabschnitte 25 der Gegenzungen 22, 23 an dem ersten Gegenstand 26 an.

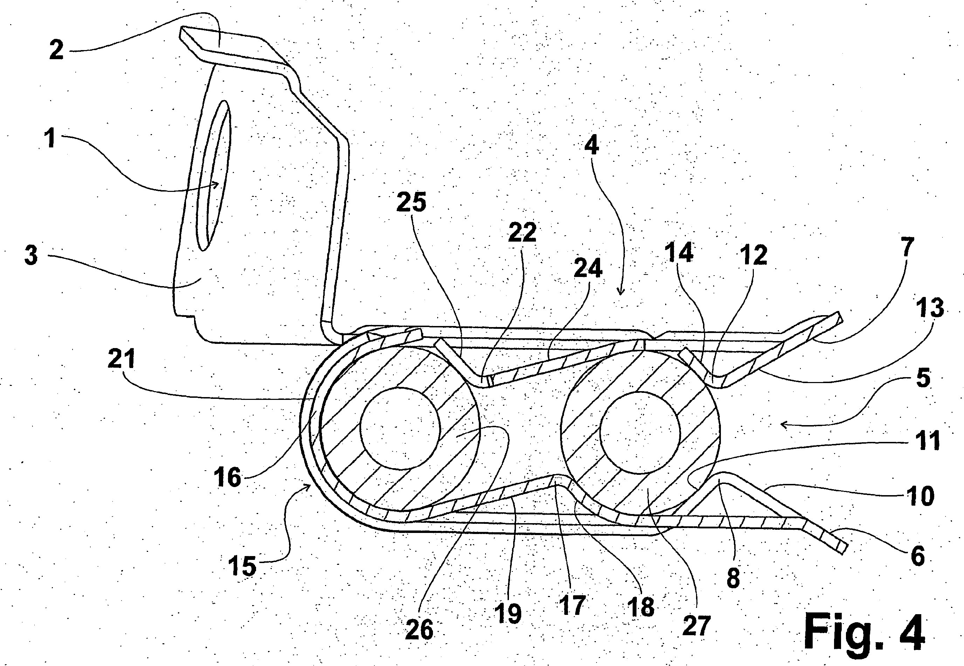

Fig. 4 zeigt in einem Querschnitt das Ausführungsbeispiel gemäß Fig. 1 bis Fig. 3 mit einem zweiten Gegenstand 27 in Anlage an dem in Einführrichtung ansteigenden Vorderabschnitt 18 des Anlenkelementes 17. Aufgrund der Fixierung der Arretierzunge 15 bildet das Anlenkelement 17 für den zweiten Gegenstand 27 ein auch bei größter Krafteinwirkung nahezu unüberwindbares Hindernis, so dass der zweite Gegenstand 27 in einem dem der Lage des Anlenkelementes 17 entsprechenden Abstand von dem ersten Gegenstand 26 zusammen mit der fixierenden Wirkung der Randzungen 8, 9 in dem Aufnahmeteil 4 gehalten ist.

Aus Fig. 4 ist weiterhin ersichtlich, dass bei Überwinden des durch die Randzungen 8, 9 entgegengesetzten Widerstandes nach einer Entnahme des zweiten Gegenstandes 27 auch der erste Gegenstand 26 durch eine Bewegung entgegen der Einführrichtung nach Überwinden des durch das Anlenkelement 17 entgegengesetzten Widerstandes wieder aus dem Aufnahmeteil 4 entfernbar ist, ohne dass es zu Beschädigungen oder gar Zerstörungen an dem Aufnahmeteil'4 kommt. Damit lässt sich der Vorgang des Einfügens und Entfernens von Gegenständen 26, 27 beliebig oft wiederholen, ohne dass die Haltewirkung beeinträchtigte wird oder die Gegenstände 26, 27 beschädigt werden.

## Patentansprüche

1. Vorrichtung zum Halten von wenigstens zwei länglichen Gegenständen (26, 27) in einer im wesentlichen parallelen Anordnung mit einem einen Aufnahmeraum (5) umschließenden Aufnahmeteil (4) zum Aufnehmen der Gegenstände (26, 27), wobei das Aufnahmeteil (4) einen Widerlagerbereich (20, 21) aufweist, an dem der in das Aufnahmeteil (4) zuerst eingeführte erste Gegenstand (26) anliegt, und mit dem Aufnahmeteil (4) in Verbindung stehenden Federelementen (8, 9, 12, 15) zum Fixieren der Gegenstände (26, 27), wobei ein Federelement als eine quer zur Längsrichtung des Aufnahmeteiles (4) zwischen einer Auslenkstellung und einer Ruhestellung bewegliche Arretierzunge (15) ausgebildet ist, die an ihrem freien Ende einen an den ersten Gegenstand (26) anlegbaren Abschnitt (16) und in Einführrichtung dem Aufnahmeabschnitt (16) vorgelagert ein in der Ruhestellung in den Aufnahmeraum (5) vorstehendes Anlenkelement (17) aufweist, wobei sich bei Einführen des ersten Gegenstandes (26) bei Kontakt des Anlenkelementes (17) mit dem ersten Gegenstand (26) das freie Ende in die Auslenkstellung bewegt, **dadurch gekennzeichnet, dass** der Abschnitt an dem freien Ende der Arretierzunge (15) ein umgebogener Aufnahmeabschnitt (16) ist, der bei Anliegen des ersten Gegenstandes (26) an dem Widerlagerbereich (20, 21) den ersten Gegenstand (26) so weit umschließt, dass die Arretierzunge (15) in der Ruhestellung fixiert ist, und dass das Anlenkelement (17) zwischen zwei jeweils einen Gegenstand (26, 27) aufnehmenden Bereichen des Aufnahmeraumes (5) angeordnet ist.

2. Vorrichtung nach Anspruch 1, **dadurch gekennzeichnet, dass** die dem ersten Gegenstand (26) im Gebrauch zugewandte Seite des Aufnahmeabschnittes (16) entsprechend dem Widerlagerbereich (20, 21) ausgebildet ist.

3. Vorrichtung nach Anspruch 1 oder Anspruch 2, **dadurch gekennzeichnet, dass** das Anlenkelement (17) einen Vorderabschnitt (18) und einen Rückabschnitt (19) aufweist, die in einem in den Aufnahmeraum (5) hineinragenden Knickbereich zusammenlaufen.

4. Vorrichtung nach einem der Ansprüche 1 bis 3, **dadurch gekennzeichnet, dass** wenigstens ein weiteres Federelement (22, 23) vorhanden ist, das dem Anlenkelement (17) gegenüberliegt.

5. Vorrichtung nach Anspruch 4, **dadurch gekennzeichnet, dass** das oder jedes dem Anlenkelement (17) gegenüberliegende Federelement als Gegenzunge (22, 23) mit einem dem erhabensten Bereich des Anlenkelementes (17) gegenüberliegenden Vorsprung ausgebildet ist.

6. Vorrichtung nach Anspruch 5, **dadurch gekennzeichnet, dass** der oder jeder Vorsprung durch einen Vorderabschnitt (24) und einen Rückabschnitt (25) gebildet ist, die in einem in den Aufnahmeraum (5) hineinragenden Knickbereich aufeinander zu laufen.

## Claims

1. Device for holding at least two elongate objects (26, 27) in an essentially parallel arrangement, comprising a receptacle portion (4) enclosing a receptacle chamber (5) for accommodating the objects (26, 27), wherein the receptacle portion (4) has an abutment region (20, 21) against which the first object (26) first introduced into the receptacle portion (4) lies, and comprising spring elements (8, 9, 12, 15) connected to the receptacle portion (4) for fixing the objects (26, 27), wherein one spring element is configured as a retaining tongue (15) which is movable transversely to the longitudinal direction of the receptacle portion (4) between a deflected position and a rest position and which has a section (16) at the free end thereof which can be placed against the first object (26) and, mounted in front of the receptacle section (16) in the introducing direction, has a coupling element (17) which, in the rest position, projects into the receptacle chamber (5), wherein on introducing the first object (26) on contact of the coupling element (17) with the first object (26), the free end moves into the deflected position, **characterised in that** the section at the free end of the retaining tongue (15) is a bent-over receptacle section (16) which, when the first object (26) lies against the abutment region (20, 21), encloses the first object (26) to such an extent that the retaining tongue (15) is fixed in the rest position and that the coupling element (17) is arranged between two regions of the receptacle chamber (5) each of which accommodates an object (26, 27).

2. Device according to claim 1, **characterised in that** the side of the receptacle section (16) facing toward the first object (26) when in use is configured in accordance with the abutment region (20, 21).

3. Device according to claim 1 or 2, **characterised in that** the coupling element (17) comprises a front section (18) and a rear section (19) which merge in a bend region which projects into the receptacle chamber (5).

4. Device according to one of the claims 1 to 3, **characterised in that** at least one further spring element (22, 23) which is arranged opposing the coupling element (17) is provided.

5. Device according to claim 4, **characterised in that** the or each spring element arranged opposing the coupling element (17) is configured as a countertongue (22, 23) with a projection arranged opposing the most elevated region of the coupling element (17).

6. Device according to claim 5, **characterised in that** the or each projection is formed by a front section (24) and a rear section (25) which merge in a bend region which projects into the receptacle chamber (5).

## Revendications

1. Dispositif de maintien en position d'au moins deux objets de forme allongée (26, 27) disposés suivant une orientation sensiblement parallèle, comprenant un élément formant logement d'insertion (4) définissant un gabarit de réception (5) dans lequel les objets (26, 27) sont destinés à être placés, l'élément formant logement d'insertion (4) comportant en l'occurrence une portion de butée (20, 21) contre laquelle le premier objet (26) inséré pour commencer dans l'élément formant logement d'insertion (4) est en contact d'application, et comprenant des organes élastiques (8, 9, 12, 15) opérant en liaison avec l'élément formant logement d'insertion (4) pour immobiliser en position les objets (26, 27), un organe élastique se présentant en l'occurrence sous la forme d'une languette de blocage en position (15) susceptible de se déplacer, obliquement par rapport à la direction longitudinale de l'élément formant logement d'insertion (4), entre une position déportée vers l'extérieur et une position de repos, qui comporte, au niveau de son extrémité libre, une portion (16) destinée à être amenée en contact d'application contre le premier objet (26) et, disposé dans le sens de l'introduction en amont de la portion de réception (16), un élément de guidage (17) faisant, en position de repos, saillie à l'intérieur du gabarit de réception (5), l'extrémité libre passant en l'occurrence dans la position de déport vers l'extérieur lors de l'insertion du premier objet (26) sous l'effet de la venue de l'élément de guidage (17) en contact avec le premier objet (26), **caractérisé en ce que** la portion se situant au niveau de l'extrémité libre de la languette de blocage en position (15) consiste en une portion de réception cintrée (16) qui, lors de la venue du premier objet (26) en contact d'application contre la portion de butée (20, 21) enserre l'objet (26) dans une proportion telle que la languette de blocage en position (15) est immobilisée dans sa position de repos, et que l'élément de guidage (17) se trouve alors disposé entre deux zones du gabarit de réception (5) enserrant chacune respectivement un objet (26, 27).

2. Dispositif selon la revendication 1, **caractérisé en ce que** la configuration de la face de la portion de réception (16) orientée, en situation fonctionnelle d'utilisation, vers le premier objet (26), est étudiée pour épouser la forme de la portion de butée (20, 21).

3. Dispositif selon la revendication 1 ou la revendication 2, **caractérisé en ce que** l'élément de guidage (17) se compose d'une portion antérieure (18) et d'une portion postérieure (19) qui se rejoignent en formant une portion coudée qui fait saillie à l'intérieur du gabarit de réception (5)

4. Dispositif selon l'une des revendications 1 à 3, **caractérisé en ce qu'**il est prévu au moins un autre organe élastique (22, 23), qui est disposé vis-à-vis de l'élément de guidage (17).

5. Dispositif selon la revendication 4, **caractérisé en ce que** l'organe élastique disposé vis-à-vis du ou de chaque élément de guidage (17) est muni d'une protubérance faisant face à la zone la plus rehaussée de l'élément de guidage (17).

6. Dispositif selon la revendication 5, **caractérisé en ce que** la ou chaque protubérance se compose d'une portion antérieure (24) et d'une portion postérieure (25), qui se rejoignent respectivement en formant une portion coudée qui fait saillie à l'intérieur du gabarit de réception (5).
